(19) 

Europäisches
Patentamt
European
Patent Office
Office européen
des brevets

(11) **EP 4 024 274 A1**

(12) **EUROPEAN PATENT APPLICATION**
published in accordance with Art. 153(4) EPC

(43) Date of publication:
**06.07.2022  Bulletin 2022/27**

(51) International Patent Classification (IPC):
***G06K 9/46*** *(2006.01)*

(21) Application number: **20856644.8**

(22) Date of filing: **27.08.2020**

(86) International application number:
**PCT/CN2020/111602**

(87) International publication number:
**WO 2021/037113 (04.03.2021 Gazette 2021/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **27.08.2019   CN 201910797332**

(71) Applicant: **Beijing Kingsoft Digital Entertainment
Co., Ltd.
Beijing 100085 (CN)**

(72) Inventors:
• **SONG, Zhenqi
  Beijing 100085 (CN)**
• **LI, Changliang
  Beijing 100085 (CN)**
• **LIAO, Minpeng
  Beijing 100085 (CN)**

(74) Representative: **Zimmermann & Partner
Patentanwälte mbB
Postfach 330 920
80069 München (DE)**

(54) **IMAGE DESCRIPTION METHOD AND APPARATUS, COMPUTING DEVICE, AND STORAGE
MEDIUM**

(57)    Disclosed is an image description method and apparatus, a computing device and a storage medium, the method comprises: performing feature extraction on a target image with a plurality of first feature extraction models to obtain image features generated by each of the first feature extraction models; performing fusion processing on the image features generated by the plurality of first feature extraction models to generate global image features corresponding to the target image; performing feature extraction on the target image with a second feature extraction model to obtain target detection features corresponding to the target image; inputting the global image features corresponding to the target image and the target detection features corresponding to the target image into a translation model to generate a translation sentence, and taking the translation sentence as a description sentence of the target image, such that in the subsequent process of inputting the global image features corresponding to the target image and the target detection features corresponding to the target image into the translation model to generate the translation sentence, the global image features with richer image information can be used as a reference for making the outputted translation sentence more accurate.

Performing feature extraction on a target image with a plurality of first feature extraction models to obtain image features generated by each of the first feature extraction models — 201

Performing fusion processing on the image features generated by the plurality of first feature extraction models to generate global image features corresponding to the target image — 202

Performing feature extraction on the target image with a second feature extraction model to obtain target detection features corresponding to the target image — 203

Inputting the global image features corresponding to the target image and the target detection features corresponding to the target image into a translation model to generate a translation sentence, and taking the translation sentence as a description sentence of the target image — 204

FIG. 2

## Description

The present application claims the priority to a Chinese patent application No. 201910797332.X filed with the China National Intellectual Property Administration on August 27, 2019 and entitled "image description method and apparatus", which is incorporated herein by reference in its entirety.

## TECHNICAL FIELD

The present application relates to the technical field of image processing, and in particular, to an image description method and apparatus, computing device and storage medium.

## BACKGROUND

Image description refers to the automatic generation of a descriptive text based on the image, similar to "talking about pictures". Image description is simple and natural for human being, while it is a task full of challenges for a machine. The reason is that the machine should not only be able to detect objects in the image, but also understand the relationship between the objects, and finally express them in a reasonable language.

In the prior art, in the process of image description, it is necessary that the machine extracts local information and global information from a target image, inputs the local information and global information into a translation model, and takes sentences outputted by the translation model as description information corresponding to the image. A single feature extraction model is mostly utilized in the current image description tasks to extract the global information from the target image. In this case, the extraction of global information by the feature extraction model depends on the performance of the feature extraction model itself. Some feature extraction models will focus on a certain type of information in the image, and some feature extraction models will focus on another type of information in the image, which causes the translation model fail to take the complete global information corresponding to the image as a reference in the subsequent process, resulting in deviations in the output sentences.

## SUMMARY

In view of this, the embodiment of the present application provides an image description method and apparatus, computing device and storage medium, so as to solve the technical defects in the existing technology.

In a first aspect, an embodiment of the present application provides an image description method, including:

performing feature extraction on a target image with a plurality of first feature extraction models to obtain image features generated by each of the first feature extraction models;

performing fusion processing on the image features generated by the plurality of first feature extraction models to generate global image features corresponding to the target image;

performing feature extraction on the target image with a second feature extraction model to obtain target detection features corresponding to the target image;

inputting the global image features corresponding to the target image and the target detection features corresponding to the target image into a translation model to generate a translation sentence, and taking the translation sentence as a description sentence of the target image.

Optionally, performing fusion processing on the image features generated by the plurality of first feature extraction models to generate the global image features corresponding to the target image includes:

performing feature extraction on the image features generated by the plurality of first feature extraction models respectively through corresponding first self-attention layers to obtain a plurality of intermediate features;

splicing the plurality of intermediate features to generate initial global features;

performing fusion processing on the initial global features through at least one second self-attention layer to generate global image features.

Optionally, the translation model includes an encoder and a decoder;

inputting the global image features corresponding to the target image and the target detection features corresponding to the target image into the translation model to generate a translation sentence, and taking the translation sentence as a description sentence of the target image comprises:

inputting the target detection features and the global image features into the encoder of the translation model to generate encoding vectors outputted by the encoder;

inputting the encoding vectors and the global image features into the decoder to generate decoding vectors outputted by the decoder;

generating a corresponding translation sentence based on the decoding vectors outputted by the decoder, and taking the translation sentence as a description sentence of the target image.

Optionally, the encoder includes N sequentially connected encoding layers, wherein N is an integer greater than 1;

inputting the target detection features and the global image features into the encoder of the translation model to generate the encoding vectors outputted by the encoder includes:

S11. inputting the target detection features and the global image features into a first encoding layer to obtain output vectors of the first encoding layer;

S12. inputting output vectors of an $i-1^{th}$ encoding layer and the global image features into an $i^{th}$ encoding layer to obtain output vectors of the $i^{th}$ encoding layer, wherein, $2 \leq i \leq N$;

S13. determining whether i is equal to N, if i is not equal to N, incrementing i by 1 and executing step S12; if i is equal to N, executing step S14;

S14. taking output vectors of a $N^{th}$ encoding layer as the encoding vectors outputted by the encoder.

Optionally, the encoding layer comprises: a first encoding self-attention layer, a second encoding self-attention layer, and a first feedforward layer;
inputting the target detection features and the global image features into the first encoding layer to obtain output vectors of the first encoding layer includes:

inputting the target detection features into a first encoding self-attention layer to obtain first intermediate vectors;

inputting the first intermediate vectors and the global image features into a second encoding self-attention layer to obtain second intermediate vectors;

processing the second intermediate vectors through the first feedforward layer to obtain the output vectors of the first encoding layer.

Optionally, the encoding layer includes: a first encoding self-attention layer, a second encoding self-attention layer, and a first feedforward layer;
inputting the output vectors of the $i-1^{th}$ encoding layer and the global image features into the $i^{th}$ encoding layer to obtain the output vectors of the $i^{th}$ encoding layer comprises: inputting the output vectors of the $i-1^{th}$ encoding layer into the first encoding self-attention layer to obtain third intermediate vectors; inputting the third intermediate vectors and the global image features into the second encoding self-attention layer to obtain fourth intermediate vectors; processing the fourth intermediate vectors through the first feedforward layer to obtain the output vectors of the $i^{th}$ encoding layer.
Optionally, the decoder comprises M sequentially connected decoding layers, wherein M is an integer greater than 1;
inputting the encoding vectors and the global image features into the decoder to generate the decoding vectors outputted by the decoder comprises:

S21. inputting reference decoding vectors, the encoding vectors, and the global image features into the first decoding layer to obtain output vectors of the first decoding layer;
S22. inputting output vectors of a $j-1^{th}$ decoding layer, the encoding vectors and the global image features into a $j^{th}$ decoding layer to obtain output vectors of the $j^{th}$ decoding layer, wherein, $2 \leq j \leq M$;

S23. determining whether j is equal to M, if j is not equal to M, incrementing j by 1 and executing step S22; if j is equal to M, executing step S24;
S24. taking output vectors of a Mth decoding layer as the decoding vectors outputted by the decoder.

Optionally, the decoding layer includes: a first decoding self-attention layer, a second decoding self-attention layer, a third decoding self-attention layer, and a second feedforward layer;
inputting the reference decoding vectors, the encoding vectors, and the global image features into the first decoding layer to obtain the output vectors of the first decoding layer comprises:
processing the reference decoding vectors through the first decoding self-attention layer to obtain fifth intermediate vectors; processing the fifth intermediate vectors and the global image features through the second decoding self-attention layer to obtain sixth intermediate vectors; processing the sixth intermediate vectors and the encoding vectors through the third decoding self-attention layer to obtain seventh intermediate vectors; processing the seventh intermediate vectors through a second feedforward layer to obtain the output vectors of the first decoding layer.

Optionally, the decoding layer comprises: the first decoding self-attention layer, the second decoding self-attention layer, the third decoding self-attention layer, and the second feedforward layer;
inputting the output vectors of the j-1th decoding layer, the encoding vectors and the global image features into the jth decoding layer to obtain the output vectors of the jth decoding layer comprises:

processing the output vectors of the j-1th decoding layer through the first decoding self-attention layer to obtain eighth intermediate vectors;

processing the eighth intermediate vectors and the global image features through the second decoding self-attention layer to obtain ninth intermediate vectors;

processing the ninth intermediate vectors and the encoding vectors through the third decoding self-attention layer to obtain tenth intermediate vectors;

processing the tenth intermediate vectors through the second feedforward layer to obtain the output vectors of the jth decoding layer.

In a second aspect, an embodiment of the present application provides an image description apparatus, including:

a feature extraction module configured for performing feature extraction on a target image with a plurality of first feature extraction models to obtain image features generated by each of the first feature extraction models;

a global image feature extraction module configured for performing fusion processing on the image features generated by the plurality of first feature extraction models to generate global image features corresponding to the target image;

a target detection feature extraction module configured for performing feature extraction on the target image with a second feature extraction model to obtain target detection features corresponding to the target image;

a translation module configured for inputting the global image features corresponding to the target image and the target detection features corresponding to the target image into a translation model to generate a translation sentence, and taking the translation sentence as a description sentence of the target image.

In a third aspect, an embodiment of the present application provides a computing device, including a memory, a processor, and computer instructions executable on a processor which, when executed by the processor, implements steps of the above-mentioned image description method.
In a fourth aspect, an embodiment of the present application provides a computer-readable storage medium, having stored thereon computer instructions which, when executed by a processor, implements steps of the above-mentioned image description method.
In a fifth aspect, an embodiment of the present application provides a computer program product for implementing steps of the above-mentioned image description method at runtime.
The image description method and apparatus, computer device and storage medium according to the present application perform feature extraction on a target image with a plurality of first feature extraction models to obtain image features generated by each of the first feature extraction models; and perform fusion processing on the image features generated by the plurality of first feature extraction models to generate global image features corresponding to the target image. It overcomes the defect that a single feature extraction model is too dependent on the performance of the model itself. Compared with the prior art that uses a single feature extraction model to extract image features, the image description method and apparatus, computer device and storage medium can alleviate the defect of single performance of the extracted image features by a single feature extraction model, such that in the subsequent process of inputting the global image features corresponding to the target image and the target detection features corresponding to the target image into the translation model to generate the translation sentence, the global image features with richer image information can be used as a reference for making the outputted translation sentence more accurate.

Secondly, the present application performs feature extraction on a target image with a plurality of first feature extraction models, and splices image features extracted by the plurality of first feature extraction models to obtain initial global features, so as to make the initial global features include more complete features of the target image as much as possible; then performs fusion processing though a plurality of second self-attention layers to obtain a target region that needs to be focused on, so as to put more attention computing resources in the target region to obtain more detail information about the target image and ignore other irrelevant information. With this mechanism, limited attention computing resources can be utilized to quickly filter high-value information from a large amount of information, so as to obtain global image features containing richer image information.

Thirdly, the present application inputs the target detection features and the global image features into an encoder, so that the global image features containing rich image information can be used as background information in the encoding process of each encoding layer, and more image information can be extracted by the decoding vectors of each obtained encoding layer, making the outputted translation sentence more accurate.

In addition, the present application inputs the global image features into each decoding layer of the decoder, so that the global image features containing rich image information can be used as background information in the decoding process of each decoding layer, enabling a higher correspondence between the decoding vectors from decoding and the image information, making the outputted translation sentence more accurate.

## BRIEF DESCRIPTION OF THE DRAWINGS

In order to more clearly describe the technical solutions of the embodiments of the present application or of the prior art, drawings that need to be used in embodiments and the prior art will be briefly described below. Obviously, the drawings provided below are for only some embodiments of the present application; those skilled in the art can also obtain other drawings based on these drawings without any creative efforts.

FIG. 1 is a schematic structural diagram of a computing device according to an embodiment of the present application;

FIG. 2 is a schematic flowchart of an image description method according to an embodiment of the present application;

FIG. 3 is a schematic flowchart of an image description method according to an embodiment of the present application;

FIG. 4 is a schematic structural diagram of an encoding layer of a translation model according to an embodiment of the present application;

FIG. 5 is a schematic structural diagram of a decoding layer of the translation model according to an embodiment of the present application;

FIG. 6 is a schematic diagram of an image description method according to a further embodiment of the present application;

FIG. 7 is a schematic structural diagram of an image description apparatus according to a further embodiment of the present application.

## DETAILED DESCRIPTION

In order to make the objective, technical solutions and advantages of the present application more clear, the present application is described below in detail with reference to the accompanying drawings and by way of example. Obviously, the described embodiments are only some, and not all, of the embodiments of the present application. All other embodiments obtained based on the embodiments of the present application by those skilled in the art without any creative efforts fall into the scope of protection defined by the present application.

The terminology used in one or more embodiments of the description is for the purpose of describing particular embodiments, not intended to be limit the one or more embodiments of the description. As used in the one or more embodiments of the description and the appended claims, the singular forms "a", "an", and "the" are intended to include the plural forms as well, unless the context clearly indicates otherwise. It should also be understood that the term "and/or" as used in the one or more embodiments of the present description refers to and encompasses any and all possible combinations of one or more of the associated listed items.

It should be understood that although the terms "first", "second", etc. may be used herein in one or more embodiments of the description to describe various information, these information should not be limited by these terms. These terms are only used to distinguish one type of information from another. Without departing from the scope of one or more embodiments of the present description, for example, a "first" can be termed a "second", and, similarly, a "second" can be termed a "first", depending on the context.

Firstly, the terms involved in one or more embodiments of the present application are explained.

Image feature fusion: refers to fusing features extracted by multiple pre-trained convolutional networks during the phase of inputting image features to replace a single image feature, so as to provide richer features inputs to a training network.

RNN (Recurrent Neural Network) model: is a neural network with a feedback structure, its output is not only related to the current input and the weight of the network, but also related to the input from the previous network. The RNN model creates a model over time by adding self-connected hidden layers that span time points; in other words, the feedback of a hidden layer not only enters the output end, but also enters the hidden layer of the next time.

Transformer: a translation model comprising an encoder and a decoder, the encoder encodes a source sentence to be translated to generate vectors, and the decoder decodes the vectors of the source sentence to generate a corresponding target sentence.

Image description: a comprehensive problem fusing computer vision, natural language processing, and machine learning, it gives a natural language sentence that can describe content of an image according to the image. Generally speaking, it translates an image into a section of description text.

Self-attention calculation: for example, inputting a sentence for self-attention calculation, then each word in the sentence will perform self-attention calculation with all words in the sentence, aiming to learn the word dependency within the sentence and to capture the interior structure the sentence. Performing the self-attention calculation on the inputted image features and performing the self-attention calculation on each feature and other features, so as to learn the feature dependency within the image.

Global image features: all features corresponding to the target image.

Target detection features: the features of a specific area in the target image.

In this application, an image description method and apparatus, a computing device, and a computer-readable storage medium are provided, which are described in detail in the following embodiments.

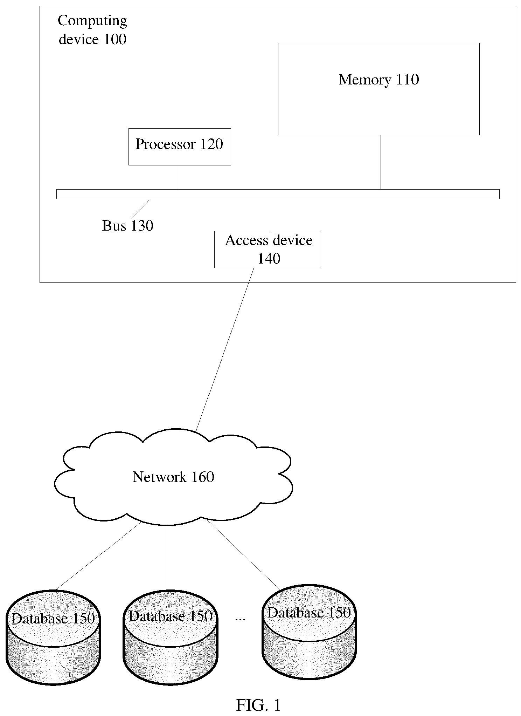

FIG. 1 shows a structural block diagram of a computing device 100 according to an embodiment of the present application. The components of the computing device 100 include but are not limited to a memory 110 and a processor 120. The processor 120 and the memory 110 are connected through a bus 130. A database 150 is used to store data.

The computing device 100 also includes an access device 140 that enables the computing device 100 to communicate via one or more networks 160. For example, the computing device 100 may communicate with the database 150 via the network 160 by means of the access device 140. Examples of these networks include Public Switched Telephone Network (PSTN), Local Area Network (LAN), Wide Area Network (WAN), Personal Area Network (PAN), or a combination of communication networks such as the Internet, and the like. The access device 140 may include one or more of any types of wired or wireless network interface (for example, Network Interface Card (NIC)), such as IEEE802.11 Wireless Local Area Networks (WLAN) wireless interface, World Interoperability for Microwave Access (Wi-MAX) interface, Ethernet interface, Universal Serial Bus (USB) interface, cellular network interface, Bluetooth interface, Near Field Communication (NFC) interface, etc.

In an embodiment of the present application, the aforementioned components of the computing device 100 and other components not shown in FIG. 1 may also be connected to each other, for example, via a bus. It should be understood that the structural block diagram of the computing device shown in FIG. 1 is for illustrative purposes only, and is not a limitation on the scope of this specification. Those skilled in the art may add or replace other components as needed.

The computing device 100 may be any type of stationary or mobile computing device, including a mobile computer or a mobile computing device (for example, a tablet computer, a personal digital assistant, a laptop, a notebook, a netbook, etc.), a mobile phone (for example, a smart phone), a wearable computing device (for example, a smart watch, a smart glasses, etc.) or other types of mobile device, or stationary computing device such as a desktop computer or a PC. The computing device 100 may also be a mobile or stationary server.

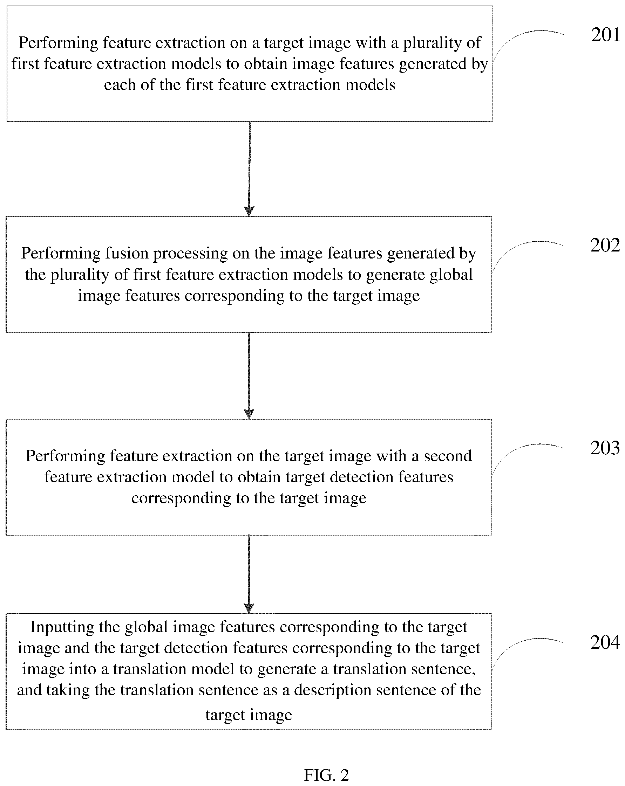

Among them, the processor 120 may execute the steps in the method shown in FIG. 2. FIG. 2 shows a schematic flowchart of an image description method according to an embodiment of the present application, including step 201 to step 204.

At step 201, feature extraction is performed on a target image with a plurality of first feature extraction models to obtain image features generated by each of the first feature extraction models.

Specifically, there may be a plurality of first feature extraction models. In the present application, the plurality of first feature extraction models are used to perform feature extraction on the target image. The types of the first feature extraction models may include convolutional network models such as VGG (Visual Geometry Group Network), Resnet model, Densnet model, inceptionv3 model and the like.

In one possible implementation, the image features extracted by the plurality of first feature models have the same size. By setting the convolutional layer parameters of the first feature model, the size of the image features may be adjusted. In addition to the same size, the numbers of channels for all image features may also be the same. For example, the dimension of the extracted image features can be expressed as 224*224*3, where 224*224 represents the height*width of the image features, that is, the size of the image features; 3 is the number of channels, that is, the number of image features. Under normal circumstances, the height and width of the input image are equal, and the size of the convolution kernel of the convolutional layer may be set according to actual needs. Commonly used convolution kernels are 1*1*1, 3*3*3, 5*5*5, 7*7*7, etc.

In one possible implementation, the sizes of the image features generated by the plurality of first feature models are all the same, but the numbers of image features (the numbers of channels) may be different from each other. For example, the image features generated by the $1^{st}$ first feature extraction model is P*Q*L1, that is, there are a number of L1 image features and the size of the image features is P*Q; the image features generated by the $2^{nd}$ first feature extraction model is P*Q*L2, that is, there are a number of L2 image features and the size of the image features is P*Q, wherein P*Q is the height*width of the image features, and L1 and L2 are the numbers of the image features generated by the $1^{st}$ first feature model and the $2^{nd}$ first feature model, respectively.

At step 202, fusion processing is performed on the image features generated by the plurality of first feature extraction models to generate global image features corresponding to the target image.

Fusion processing may be performed on the image features generated by each of the first feature extraction models through Poisson fusion method, weighted average method, feathering algorithm, Laplace fusion algorithm, self-attention algorithm, etc., to obtain the global image features corresponding to the target image.

In one possible implementation, the step 202 includes:
At step S2021, feature extraction is performed on the image features generated by the plurality of first feature extraction models respectively through corresponding first self-attention layers to obtain a plurality of intermediate features.

Wherein the first self-attention layer includes a multi-head self-attention layer and a feedforward layer. In this step, the number of first self-attention layers is the same as the number of the first feature extraction models.

Each first feature extraction model may correspond to a corresponding first self-attention layer. For example, there are five first feature extraction models, the five first feature models process the same image to generate corresponding image features, and then perform feature extraction on the image features generated by each first feature extraction model through the corresponding first self-attention layer, to obtain the generated intermediate features.

At step S2022, the plurality of intermediate features are spliced to generate initial global features.

Wherein the splicing process may be realized by calling a contact function.

For example, taking 5 first feature extraction models as an example, the intermediate features generated by first self-attention layers corresponding to the 5 first feature extraction models are spliced to generate one initial global feature. For example, the first self-attention layer corresponding to the $1^{st}$ first feature extraction model generates a number of A1 intermediate features, and the size of the intermediate features is P*Q; the first self-attention layer corresponding to the $2^{nd}$ first feature extraction model generates a number of A2 intermediate features, and the size of intermediate features is P*Q; the first self-attention layer corresponding to the $3^{rd}$ first feature extraction model generates a number of A3 intermediate features, and the size of intermediate features is P*Q; the first self-attention layer corresponding to the $4^{th}$ first feature extraction model generates a number of A4 intermediate features, and the size of intermediate features is P*Q; and the first self-attention layer corresponding to the $5^{th}$ first feature extraction model generates a number of A5 intermediate features, and the size of the intermediate features is P*Q. Then, the initial global features after splicing contain a number of (A1+ A2+ A3+ A4+ A5) features.

It should be understood that this step is to splice a plurality of intermediate features without further fusion processing. Therefore, compared with the intermediate features, the relationship between the features in the generated initial global features has not changed, which means that the features of the initial global features will be partially duplicated, and such features will be further processed in the subsequent steps.

At step S2023, fusion processing is performed on the initial global features through at least one second self-attention layer to generate global image features.

Wherein a second self-attention layer includes a multi-head self-attention layer and a feedforward layer. In this step, the number of second self-attention layers may be multiple, and the settings may be customized according to actual needs.

In one implementation, the structure of the second self-attention layer may be the same as the structure of the first self-attention layer, aiming to perform self-attention processing on the input vectors to extract the vectors that need to be processed in the subsequent steps. However, that the difference is that in a case where the number of the first self-attention layer and the number of the second self-attention layer are both multiple, the plurality of first self-attention layers process the image features generated by each first feature extraction model in parallel, whereas the second self-attention layers process the initial global features layer by layer in serial.

Fusion processing is performed on the initial global features generated by the splicing of the plurality of intermediate features through second self-attention layers, facilitating the mutual fusion of different features.

For example, for initial global features that include a feature C1 of class C, and a feature C2 of class C, the correlation between the two is relatively strong. In the process of fusion processing through a second self-attention layer, the second self-attention layer will focus on the features C1 and C2 with strong correlation, and fuse the features C1 and C2 to obtain a feature CI'.

For another example, initial global features contain multiple duplicated features D1 of class D, in the process of fusion processing through a second self-attention layer, the second self-attention layer will focus on the multiple duplicated features D1, and generate a feature D1 of class D from multiple duplicated features D1.

In this embodiment, there are many feature fusion methods, such as Poisson fusion method, weighted average method, feathering algorithm, Laplacian fusion algorithm, self-attention algorithm, etc. The self-attention algorithm is preferably used in this embodiment.

For example, a key-value pair (key-value) may be used to represent input information, wherein address "Key" represents a key, and "Value" represents a value corresponding to the key. The "key" is used to calculate attention distribution, and the "Value" is used to calculate the aggregate information. Then n pieces of input informations may be expressed as (K,V)=[(k1,v1),(k2,v2),...,(kn,vn)].

Specifically, the similarity between Query and Key may be calculated according to a formula (1):

$$Si=F(Q, ki) \tag{1}$$

wherein, Si is an attention score;

Q is Query, a query vector;
ki corresponds to each key vector.

Then, the softmax function is used to convert the attention score numerically through a formula (2). On one hand, normalization may be performed to obtain a probability distribution with the sum of all weight coefficients being 1; on the other hand, the characteristics of the softmax function may be used to highlight weights of important elements:

$$\alpha_i = softmax(s_i) = \frac{\exp(s_i)}{\sum_{j=1}^{n} \exp(s_j)} \tag{2}$$

wherein, $\alpha_i$ is the weight coefficient.

Finally, "Value" is weighted and summed according to the weight coefficients through a formula (3):

$$Attention \ ((K,V), \ Q) = \sum_{i=1}^{n} \alpha_i v_i \tag{3}$$

wherein, $v_i$ is a value vector.

According to the self-attention calculation, fusion processing is performed on initial global features containing a number of (A1+A2+A3+A4+A5) features through the second self-attention layer to obtain global image features containing a number of A' features. Generally, A' is less than or equal to (A1+A2+A3+A4+A5).

At step 203, feature extraction is performed on the target image with a second feature extraction model to obtain target detection features corresponding to the target image.

In the present application, the second feature model may be a target detection feature model for achieving the extraction of local information of the target image.

In this step 203, the second feature extraction model may select the Faster-RNN (Faster Regions with CNN features) model, which is used to identify a region of interest in the image, and allow overlapping of interest frames corresponding to multiple regions of interest by setting a threshold, thus the image content can be understood more effectively.

The main steps for extracting the target detection features by Faster-RNN include:

1) Feature extraction: the entire target image is taken as an input to obtain a feature layer of a target image.

2) Candidate regions: methods such as "Selective Search" is used to extract regions of interest from the target image, and interest frames corresponding to these regions of interest are projected to a final feature layer one by one.

3) Region normalization: a pooling operation is performed for a candidate frame of each candidate region on the feature layer to obtain a fixed-size feature representation.

4) Classification: Softmax multi-classification function is respectively used for target recognition through two fully connected layers to obtain the final target detection feature.

At step 204, the global image features corresponding to the target image and the target detection features corresponding to the target image are inputted into a translation model to generate a translation sentence, and taking the translation sentence as a description sentence of the target image.

Wherein the translation model includes an encoder and a decoder. There are various translation models, such as a Transformer model, a RNN model, etc. In this embodiment, the Transformer model is preferably used, which can further make the output sentence more accurate.

Compared with the RNN model, the Transformer model does not require a loop, instead, processes the input global image features corresponding to the target image and the target detection features corresponding to the target image in parallel, while uses the self-attention mechanism to combine features. The training speed of the Transformer model is much faster than that of the RNN model, and its translation result is more accurate than that of the RNN model.

In one implementation, the translation sentence may include multiple translation phrases. For the decoder, one translation phrase is obtained each time decoding is performed. For the first translation phrase of the translation sentence, the reference decoding vectors are preset initial decoding vectors; for each one of the other translation phrase except the first translation phrase of the translation sentence, the reference decoding vectors thereof are decoding vectors corresponding to the previous translation phrase.

The image description method according to the present application performs feature extraction on a target image with a plurality of first feature extraction models to obtain image features generated by each of the first feature extraction models; and performs fusion processing on the image features generated by the plurality of first feature extraction models to generate global image features corresponding to the target image. It overcomes the defect that a single feature extraction model is too dependent on the performance of the model itself. Compared with the prior art that uses a single feature extraction model to extract image features, the method can alleviate the defect of single performance of the extracted image features by a single feature extraction model, such that in the subsequent process of inputting the global image features corresponding to the target image and the target detection features corresponding to the target image into the translation model to generate the translation sentence, the global image features with richer image information can be used as a reference for making the outputted translation sentence more accurate.

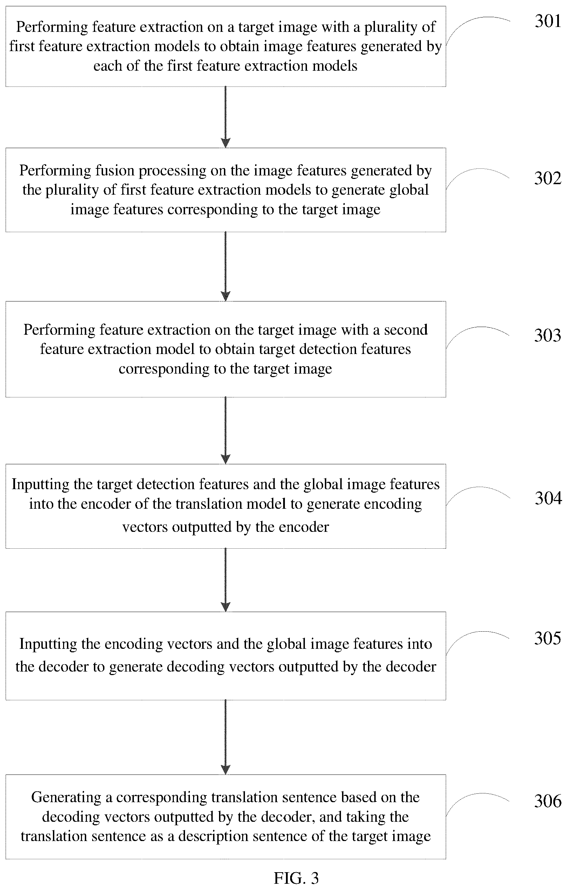

The image description method of an embodiment of the present application may also be shown in FIG. 3, including:

301. performing feature extraction on a target image with a plurality of first feature extraction models to obtain image features generated by each of the first feature extraction models.

302. performing fusion processing on the image features generated by the plurality of first feature extraction models to generate global image features corresponding to the target image.

303. performing feature extraction on the target image with a second feature extraction model to obtain target detection features corresponding to the target image.

Steps 301 to 303 are the same as steps 201 to 203 of the foregoing embodiment, and specific explanations can be referred to the foregoing embodiment, which will not be duplicated here.

At step 304, the target detection features and the global image features are inputted into an encoder of a translation model to generate encoding vectors outputted by the encoder.

Optionally, the encoder may include one or more encoding layers. In the embodiment, an encoder including N sequentially connected encoding layers is taken as an example, wherein, N>1. Step 304 includes the following steps S3041 to S3044:

S3041. inputting the target detection features and the global image features into a first encoding layer to obtain output vectors of the first encoding layer.

S3042. inputting output vectors of an i-1th encoding layer and the global image features into an ith encoding layer to obtain output vectors of the ith encoding layer, wherein, $2 \leq i \leq N$.

S3043. determining whether i is equal to N, if i is not equal to N, incrementing i by 1 and executing step S3042; if i is equal to N, executing step S3044;

S3044. taking output vectors of a Nth encoding layer as the encoding vectors outputted by the encoder.

The global image features and the output vectors of the first encoding layer are inputted into a second encoding layer to obtain output vectors of the second encoding layer; the global image features and the output vectors of the second encoding layer are inputted into a third encoding layer to obtain the output vectors of the third encoding layer; This continues until the output vectors of the Nth encoding layer is obtained.

In the embodiment of the present application, on the encoding layer side, the global image features are inputted into each encoding layer, so that the target detection features integrate the global image features in the processing of each encoding layer, enhancing the features representation of the target detection features.

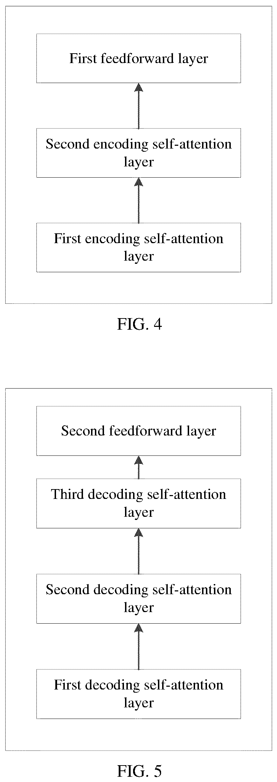

In one possible implementation, referring to FIG. 4, an encoding layer include: a first encoding self-attention layer, a second encoding self-attention layer, and a first feedforward layer;

S3041 includes: inputting the target detection features into the first encoding self-attention layer to obtain first intermediate vectors; inputting the first intermediate vectors and the global image features into the second encoding self-attention layer to obtain second intermediate vectors; processing the second intermediate vectors through the first feedforward layer to obtain output vectors of the first encoding layer.

S3042 includes: inputting output vectors of the i-1th encoding layer into the first encoding self-attention layer to obtain third intermediate vectors; inputting the third intermediate vectors and the global image features into the second encoding self-attention layer to obtain fourth intermediate vectors; processing the fourth intermediate vectors through the first feedforward layer to obtain the output vectors of the ith encoding layer.

At step 305, the encoding vectors and the global image features are inputted into a decoder, to generate decoding vectors outputted by the decoder;

Optionally, the decoder may include one or more decoding layers. In this embodiment, a decoder including M sequentially connected decoding layers is described as an example, wherein, M>1.

Step 305 includes the following steps S3051 to S3054:

S3051. inputting reference decoding vectors, the encoding vectors, and the global image features into the first decoding layer to obtain output vectors of the first decoding layer;

for the first translation phrase of the translation sentence, the reference decoding vectors are initial decoding vectors;

for the other translation phrases of the translation sentence, the reference decoding vectors are the decoding vectors corresponding to the previous translation phrase;

S3052. inputting output vectors of the j-1th decoding layer, the encoding vectors and the global image features into a jth decoding layer to obtain output vectors of the jth decoding layer, wherein, $2 \leq j \leq M$.

S3053. determining whether j is equal to M, if j is not equal to M, incrementing j by 1 and executing step S3052; if j is equal to M, executing step S3054;

S3054. taking output vectors of a Mth decoding layer as the decoding vectors outputted by the decoder.

The encoding vectors, the global image features and the output vectors of the first decoding layer are inputted into a second decoding layer to obtain output vectors of the second decoding layer; the encoding vectors, the global image features and the output vectors of the second decoding layer are inputted into a third decoding layer to obtain output vectors of the third decoding layer; This continues until output vectors of the Mth decoding layer is obtained.

In the embodiment of the present application, the global image features are inputted into each decoding layer of the decoder, so that the global image features containing rich image information can be used as background information in the decoding process of each decoding layer, enabling a higher correspondence between the decoding vectors via decoding and the image information, making the outputted translation sentence more accurate.

In one possible implementation, referring to FIG. 5, a decoding layer includes: a first decoding self-attention layer, a second decoding self-attention layer, a third decoding self-attention layer, and a second feedforward layer.

S3051 includes: processing the reference decoding vectors through the first decoding self-attention layer to obtain fifth intermediate vectors; processing the fifth intermediate vectors and the global image features through the second decoding self-attention layer to obtain sixth intermediate vectors; processing the sixth intermediate vectors and the encoding vectors through the third decoding self-attention layer to obtain seventh intermediate vectors; processing the seventh intermediate vectors through a second feedforward layer to obtain the output vectors of the first decoding layer.

S3052 includes: processing the output vectors of the j-1$^{th}$ decoding layer through the first decoding self-attention layer to obtain eighth intermediate vectors; processing the eighth intermediate vectors and the global image features through the second decoding self-attention layer to obtain ninth intermediate vectors; processing the ninth intermediate vectors and the encoding vectors through the third decoding self-attention layer to obtain tenth intermediate vectors; processing the tenth intermediate vectors through the second feedforward layer to obtain the output vectors of the j$^{th}$ decoding layer.

At step 306, a corresponding translation sentence is generated based on the decoding vectors outputted by the decoder, and the translation sentence is taken as a description sentence of the target image.

In one possible implementation, a corresponding translation phrase is generated based on the decoding vectors outputted by the decoder, and a translation sentence is generated based on the translation phrase.

Optionally, a translation sentence may include multiple translation phrases. For the decoder, one translation phrase is obtained each time decoding is performed. For the first translation phrase of the translation sentence, reference decoding vectors are preset initial decoding vectors; for the each one of the other translation phrases except the first translation phrase of the translation sentence, the reference decoding vectors thereof are decoding vectors corresponding to the previous translation phrase.

The image description method according to the present application performs feature extraction on a target image with a plurality of first feature extraction models to obtain image features generated by each of the first feature extraction models; and performs fusion processing on the image features generated by the plurality of first feature extraction models to generate global image features corresponding to the target image. It overcomes the defect that a single feature extraction model is too dependent on the performance of the model itself. Compared with the prior art that uses a single feature extraction model to extract image features, the method can alleviate the defect of single performance of the extracted image features by a single feature extraction model, such that in the subsequent process of inputting the global image features corresponding to the target image and the target detection features corresponding to the target image into the translation model to generate the translation sentence, the global image features with richer image information can be used as a reference for making the outputted translation sentence more accurate.

Secondly, the present application performs feature extraction on a target image with a plurality of first feature extraction models, and splices image features extracted by the plurality of first feature extraction models to obtain initial global features, so as to make the initial global features include more complete features of the target image as much as possible; then performs fusion processing though a plurality of second self-attention layers to obtain a target region that needs to be focused on, so as to put more attention computing resources in the target region to obtain more detail information about the target image and ignore other irrelevant information. With this mechanism, limited attention computing resources can be utilized to quickly filter high-value information from a large amount of information, so as to obtain global image features containing richer image information.

Thirdly, the present application inputs the global image features into each decoding layer, so that the global image features containing rich image information can be used as background information in the decoding process of each decoding layer, and the correspondence between the decoding vectors after decoding and the image information is higher, so as to make the outputted translation sentence more accurate.

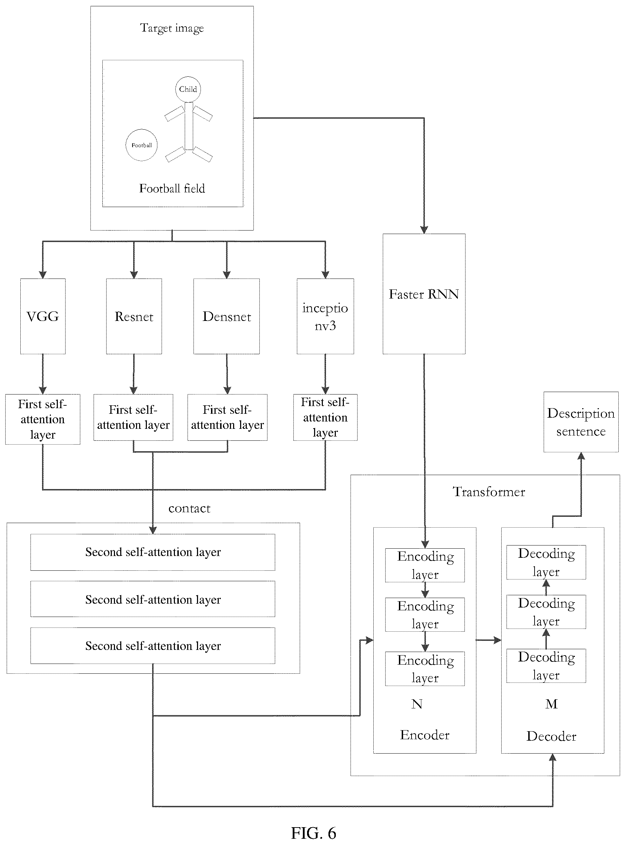

The image description method of this embodiment is suitable for an encoder-decoder machine translation model. In order to describe the image description method of the present application more clearly, referring to FIG. 6, the Transformer translation model is taken as an example for a schematic description. In FIG. 6, there are 4 first feature extraction models, i.e, VGG, Resnet, Densnet, and inceptionv3; 4 first self-attention layers; K second self-attention layers; 1 second feature extraction model, and the Transformer translation model. "Contact" refers to the contact function.

The image description method of this embodiment includes the following steps S61 to S68:

At step S61, feature extraction is performed on a target image with 4 first feature extraction models to obtain image features generated by each of the first feature extraction models.

At step S62, the image features generated by the 4 first feature extraction models are processed through the corresponding first self-attention layers respectively to obtain intermediate features generated.

Wherein the image features generated by the 1$^{st}$ first feature extraction model are processed by the corresponding first self-attention layer to obtain a number of A1 intermediate features, and the size of the intermediate features is P*Q; the image features generated by the 2nd first feature extraction model are processed by the corresponding first self-attention layer to obtain a number of A2 intermediate features, the size of the intermediate features is P*Q; the image features generated by the 3rd first feature extraction model are processed by the corresponding first self-attention layer to obtain a number of A3 intermediate features, the size of the intermediate features is P*Q; the image features generated by the 4th first feature extraction model are processed through the corresponding first self-attention layer to obtain a number of A4 intermediate features, the size of the intermediate features is P*Q.

At step S63, four intermediate features are spliced to generate initial global features.

Wherein the four intermediate features are spliced to generate initial global features containing a number of (A1+ A2+ A3+ A4) features.

At step S64, fusion processing is performed on the initial global features through a number of K second self-attention layers to generate global image features.

In this embodiment, K=3.

Wherein the initial global features containing a number of (A1+ A2+ A3+ A4) features are implemented with a fusion process to generate global image features containing a number of A' features. Generally, A≤(A1+A2+A3+A4).

At step S65, feature extraction is performed on the target image with a second feature extraction model to obtain target detection features corresponding to the target image.

In this embodiment, the second feature extraction model is a Faster RNN (Faster Regions with CNN features) model.

At step S66, the target detection features and the global image features are inputted into an encoder of the Transformer translation model to generate encoding vectors outputted by the encoder.

At step S67, reference decoding vectors, the encoding vectors, and the global image features are inputted into a decoder to generate decoding vectors outputted by the decoder.

The encoder includes N encoding layers, and the decoder includes M decoding layers.

At step S68, a corresponding translation sentence is generated based on the decoding vectors outputted by the decoder, and the translation sentence is taken as a description sentence of the target image.

For the description sentences, description sentences in different languages may be outputted based on the performance of the Transformer model. Wherein, the performance of the Transformer model may be formed through the training of a sample set. For example, the sample set is a set of "Chinese sentences to be translated+ French translated sentences ", a set of "English sentences to be translated + Japanese translated sentences" or a set of "image features + English translated sentences". In this embodiment, based on the performance of the Transformer model, an example of translating inputted image features to generate an English translated sentence is illustrated.

Optionally, based on initial reference decoding vectors, the encoding vectors, and the global image features inputted, the decoder outputs decoding vectors and the first phrase "a" is obtained. Vectors corresponding to the first phrase "a" are taken as a reference for decoding the second phrase "boy". Vectors corresponding to the second phrase "boy" are taken as reference decoding vectors, so that the decoder can obtain the next phrase "play" based on the reference decoding vectors, the encoding vectors, and the global image features... and so on, a description sentence "A boy play football on football field" is obtained.

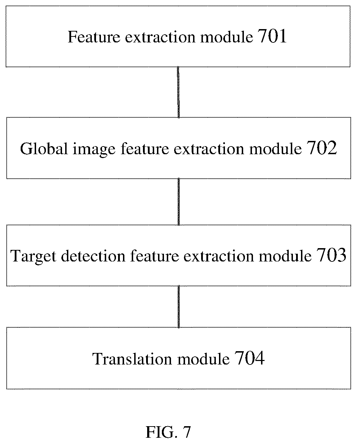

An embodiment of the present application further provides an image description apparatus, see FIG. 7, including:

a feature extraction module 701 configured for performing feature extraction on a target image with a plurality of first feature extraction models to obtain image features generated by each of the first feature extraction models;

a global image feature extraction module 702 configured for performing fusion processing on the image features generated by the plurality of first feature extraction models to generate global image features corresponding to the target image;

a target detection feature extraction module 703 configured for performing feature extraction on the target image with a second feature extraction model to obtain target detection features corresponding to the target image;

a translation module 704 configured for inputting the global image features corresponding to the target image and the target detection features corresponding to the target image into a translation model to generate a translation sentence, and taking the translation sentence as a description sentence of the target image.

Optionally, the global image feature extraction module 702 is specifically configured for:

performing feature extraction on the image features generated by the plurality of first feature extraction models respectively through corresponding first self-attention layers to obtain a plurality of intermediate features;

splicing the plurality of intermediate features to generate initial global features;

performing fusion processing on the initial global features through at least one second self-attention layer to generate global image features.

Optionally, the translation model includes an encoder and a decoder, and the translation module 704 includes:

an encoding module configured for inputting the target detection features and the global image features into the encoder of the translation model to generate encoding vectors outputted by the encoder;

a decoding module configured for inputting the encoding vectors and the global image features into the decoder to generate decoding vectors outputted by the decoder;

a sentence generation module configured for generating a corresponding translation sentence based on the decoding vectors outputted by the decoder, and taking the translation sentence as a description sentence of the target image.

Optionally, the encoder includes N sequentially connected encoding layers, wherein N is an integer greater than 1; the encoding module includes:

a first processing unit configured for inputting the target detection features and the global image features into a first encoding layer to obtain output vectors of the first encoding layer;
a second processing unit configured for inputting output vectors of an $i-1^{th}$ encoding layer and the global image features into an $i^{th}$ encoding layer to obtain output vectors of the $i^{th}$ encoding layer, wherein, $2 \leq i \leq N$;
a first determination unit configured for determining whether i is equal to N, if i is not equal to N, incrementing i by 1 and executing the second processing unit; if i is equal to N, executing an encoding vector generating unit;
the encoding vector generating unit configured for taking output vectors of a $N^{th}$ encoding layer as the encoding vectors outputted by the encoder.

Optionally, the encoding layer includes: a first encoding self-attention layer, a second encoding self-attention layer, and a first feedforward layer; the first processing unit is specifically configured for inputting the target detection features into the first encoding self-attention layer to obtain first intermediate vectors; inputting the first intermediate vectors and the global image features into the second encoding self-attention layer to obtain second intermediate vectors; processing the second intermediate vectors through the first feedforward layer to obtain the output vectors of the first encoding layer.

Optionally, the encoding layer includes: the first encoding self-attention layer, the second encoding self-attention layer, and the first feedforward layer; the second processing unit is specifically configured for inputting the output vectors of the $i-1^{th}$ encoding layer into the first encoding self-attention layer to obtain third intermediate vectors; inputting the third intermediate vectors and the global image features into the second encoding self-attention layer to obtain fourth intermediate vectors; processing the fourth intermediate vectors through the first feedforward layer to obtain output vectors of the $i^{th}$ encoding layer.

Optionally, the decoder includes M sequentially connected decoding layers, wherein M is an integer greater than 1;
the decoding module includes:

a third processing unit configured for inputting reference decoding vectors, the encoding vectors, and the global image features into the first decoding layer to obtain output vectors of the first decoding layer;

a fourth processing unit configured for inputting output vectors of the $j-1^{th}$ decoding layer, the encoding vectors and the global image features into a $j^{th}$ decoding layer to obtain output vectors of the $j^{th}$ decoding layer, wherein, $2 \leq j \leq M$;

a second determination unit configured for determining whether j is equal to M, if j is not equal to M, incrementing j by 1 and executing the fourth processing unit; if j is equal to M, executing a decoding vector generation unit;

the decoding vector generation unit configured for taking output vectors of a $M^{th}$ decoding layer as the decoding vectors outputted by the decoder.

Optionally, the decoding layer includes: a first decoding self-attention layer, a second decoding self-attention layer, a third decoding self-attention layer, and a second feedforward layer; the third processing unit is specifically configured for:

processing the reference decoding vectors through the first decoding self-attention layer to obtain fifth intermediate vectors;

processing the fifth intermediate vectors and the global image features through the second decoding self-attention layer to obtain sixth intermediate vectors;

processing the sixth intermediate vectors and the encoding vectors through the third decoding self-attention layer to obtain seventh intermediate vectors;

processing the seventh intermediate vectors through a second feedforward layer to obtain the output vectors of the first decoding layer.

Optionally, the decoding layer includes: the first decoding self-attention layer, the second decoding self-attention layer, the third decoding self-attention layer, and the second feedforward layer; the fourth processing unit is specifically configured for:

processing the output vectors of the $j$-$1^{th}$ decoding layer through the first decoding self-attention layer to obtain eighth intermediate vectors;

processing the eighth intermediate vectors and the global image features through the second decoding self-attention layer to obtain ninth intermediate vectors;

processing the ninth intermediate vectors and the encoding vectors through the third decoding self-attention layer to obtain tenth intermediate vectors;

processing the tenth intermediate vectors through the second feedforward layer to obtain the output vectors of the $j^{th}$ decoding layer.

The foregoing is a schematic solution of the image description apparatus of this embodiment. It should be noted that the technical solution of the image description apparatus and the technical solution of the above-mentioned image description method belong to the same concept. Details that are not described in detail in the technical solution of the image description apparatus may be referred to the description of the technical solution of the above image description method.
An embodiment of the present application further provides a computer-readable storage medium, having stored thereon computer programs which, when executed by a processor, implements steps of the above-mentioned image description method.
The foregoing is a schematic solution of the computer-readable storage medium of this embodiment. It should be noted that the technical solution of the storage medium and the technical solution of the above-mentioned image description method belong to the same concept. Details that are not described in detail in the technical solution of the storage medium, reference may be referred to the description of the technical solution of the above image description method.
An embodiment of the present application provides a computer program product for implementing steps of the above-mentioned image description method at runtime.
The computer instructions include computer program codes, and the computer program codes may be in the form of source codes, object codes, executable files, or some intermediate forms. The computer-readable medium may include: any entity or apparatus capable of carrying the computer program codes, recording medium, U disk, mobile hard disk, magnetic disk, optical disk, computer memory, Read-Only Memory (ROM), Random Access Memory (RAM), electrical carrier signal, telecommunications signal, and software distribution media. It should be noted that the content contained in the computer-readable medium may be appropriately added or deleted in accordance with the requirements of the legislation and patent practice in the jurisdiction. For example, in some jurisdictions, according to legislation and patent practices, computer-readable media do not include electrical carrier signals and telecommunication signals.
It should be noted that for simplicity and convenience of description, the above-described method embodiments are described as a series of combinations of actions, but those skilled in the art will appreciate that the present application is not limited by the order of the actions, as some steps may, in accordance with the present application, occur in other orders and/or at the same time. Further, those skilled in the art will also appreciate that the embodiments described in this specification are presently considered to be preferred embodiments and that actions and modules are not necessarily required in the present application.

In the foregoing embodiments, the descriptions of the respective embodiments have respective emphasis, and for parts that are not described in detail in a certain embodiment, reference may be made to the related descriptions of other embodiments.

The preferred embodiments of the present application disclosed above are intended only to aid in the illustration of the application. Optional embodiments are not described in all details, nor they limit the only implementations of the present application. Obviously, many modifications and variations can be made according to the content of the specification. The specification selects and specifically describes these embodiments in order to better explain the principles and practical applications of the present application, so that those skilled in the art can understand and utilize the application well. The present application is only limited by the claims and their full scope and equivalents.

**Claims**

1. An image description method, comprising:

    performing feature extraction on a target image with a plurality of first feature extraction models to obtain image features generated by each of the first feature extraction models;
    performing fusion processing on the image features generated by the plurality of first feature extraction models to generate global image features corresponding to the target image;
    performing feature extraction on the target image with a second feature extraction model to obtain target detection features corresponding to the target image;
    inputting the global image features corresponding to the target image and the target detection features corresponding to the target image into a translation model to generate a translation sentence, and taking the translation sentence as a description sentence of the target image.

2. The method of claim 1, wherein performing fusion processing on the image features generated by the plurality of first feature extraction models to generate the global image features corresponding to the target image comprises:

    performing feature extraction on the image features generated by the plurality of first feature extraction models respectively through corresponding first self-attention layers to obtain a plurality of intermediate features;
    splicing the plurality of intermediate features to generate initial global features;
    performing fusion processing on the initial global features through at least one second self-attention layer to generate global image features.

3. The method of claim 1 or 2, wherein the translation model comprises an encoder and a decoder; inputting the global image features corresponding to the target image and the target detection features corresponding to the target image into the translation model to generate a translation sentence, and taking the translation sentence as a description sentence of the target image comprises:

    inputting the target detection features and the global image features into the encoder of the translation model to generate encoding vectors outputted by the encoder;
    inputting the encoding vectors and the global image features into the decoder to generate decoding vectors outputted by the decoder;
    generating a corresponding translation sentence based on the decoding vectors outputted by the decoder, and taking the translation sentence as a description sentence of the target image.

4. The method of claim 3, wherein the encoder comprises N sequentially connected encoding layers, wherein N is an integer greater than 1; inputting the target detection features and the global image features into the encoder of the translation model to generate the encoding vectors outputted by the encoder comprises:

    S11. inputting the target detection features and the global image features into a first encoding layer to obtain output vectors of the first encoding layer;
    S12. inputting output vectors of an $i$-$1^{th}$ encoding layer and the global image features into an $i^{th}$ encoding layer to obtain output vectors of the $i^{th}$ encoding layer, wherein, $2 \leq i \leq N$;
    S13. determining whether $i$ is equal to $N$, if $i$ is not equal to $N$, incrementing $i$ by 1 and executing step S12; if $i$ is equal to $N$, executing step S14;

S14. taking output vectors of a $N^{th}$ encoding layer as the encoding vectors outputted by the encoder.

5. The method of claim 4, wherein the encoding layer comprises: a first encoding self-attention layer, a second encoding self-attention layer, and a first feedforward layer;
inputting the target detection features and the global image features into the first encoding layer to obtain output vectors of the first encoding layer comprises:

inputting the target detection features into first encoding self-attention layer to obtain first intermediate vectors;
inputting the first intermediate vectors and the global image features into second encoding self-attention layer to obtain second intermediate vectors;
processing the second intermediate vectors through the first feedforward layer to obtain the output vectors of the first encoding layer.

6. The method of claim 4 or 5, wherein the encoding layer comprises: a first encoding self-attention layer, a second encoding self-attention layer, and a first feedforward layer;
inputting the output vectors of the $i-1^{th}$ encoding layer and the global image features into the $i^{th}$ encoding layer to obtain the output vectors of the $i^{th}$ encoding layer comprises:

inputting the output vectors of the $i-1^{th}$ encoding layer into the first encoding self-attention layer to obtain third intermediate vectors;
inputting the third intermediate vectors and the global image features into the second encoding self-attention layer to obtain fourth intermediate vectors;
processing the fourth intermediate vectors through the first feedforward layer to obtain the output vectors of the $i^{th}$ encoding layer.

7. The method of any one of claims 3-6, wherein the decoder comprises M sequentially connected decoding layers, wherein M is an integer greater than 1;
inputting the encoding vectors and the global image features into the decoder to generate the decoding vectors outputted by the decoder comprises:

S21. inputting reference decoding vectors, the encoding vectors, and the global image features into a first decoding layer to obtain output vectors of the first decoding layer;
S22. inputting output vectors of a $j-1^{th}$ decoding layer, the encoding vectors and the global image features into a $j^{th}$ decoding layer to obtain output vectors of the $j^{th}$ decoding layer, wherein, $2 \leq j \leq M$ ;
S23. determining whether j is equal to M, if j is not equal to M, incrementing j by 1 and executing step S22; if j is equal to M, executing step S24;
S24. taking output vectors of a $M^{th}$ decoding layer as the decoding vectors outputted by the decoder.

8. The method of claim 7, wherein the decoding layer comprises: a first decoding self-attention layer, a second decoding self-attention layer, a third decoding self-attention layer, and a second feedforward layer;
inputting the reference decoding vectors, the encoding vectors, and the global image features into the first decoding layer to obtain the output vectors of the first decoding layer comprises:

processing the reference decoding vectors through the first decoding self-attention layer to obtain fifth intermediate vectors;
processing the fifth intermediate vectors and the global image features through the second decoding self-attention layer to obtain sixth intermediate vectors;
processing the sixth intermediate vectors and the encoding vectors through the third decoding self-attention layer to obtain seventh intermediate vectors;
processing the seventh intermediate vectors through a second feedforward layer to obtain the output vectors of the first decoding layer.

9. The method of claim 7 or 8, wherein the decoding layer comprises: a first decoding self-attention layer, a second decoding self-attention layer, a third decoding self-attention layer, and a second feedforward layer;
inputting the output vectors of the $j-1^{th}$ decoding layer, the encoding vectors and the global image features into the $j^{th}$ decoding layer to obtain the output vectors of the $j^{th}$ decoding layer comprises:

processing the output vectors of the $j-1^{th}$ decoding layer through the first decoding self-attention layer to obtain eighth intermediate vectors;

processing the eighth intermediate vectors and the global image features through the second decoding self-attention layer to obtain ninth intermediate vectors;

processing the ninth intermediate vectors and the encoding vectors through the third decoding self-attention layer to obtain tenth intermediate vectors;

processing the tenth intermediate vectors through the second feedforward layer to obtain the output vectors of the $j^{th}$ decoding layer.

10. An image description apparatus, comprising:

a feature extraction module configured for performing feature extraction on a target image with a plurality of first feature extraction models to obtain image features generated by each of the first feature extraction models;

a global image feature extraction module configured for performing fusion processing on the image features generated by the plurality of first feature extraction models to generate global image features corresponding to the target image;

a target detection feature extraction module configured for performing feature extraction on the target image with a second feature extraction model to obtain target detection features corresponding to the target image;

a translation module configured for inputting the global image features corresponding to the target image and the target detection features corresponding to the target image into a translation model to generate a translation sentence, and taking the translation sentence as a description sentence of the target image.

11. The apparatus of claim 10, wherein the global image feature extraction module is specifically configured for:

performing feature extraction on the image features generated by the plurality of first feature extraction models respectively through corresponding first self-attention layers to obtain a plurality of intermediate features;

splicing the plurality of intermediate features to generate initial global features;

performing fusion processing on the initial global features through at least one second self-attention layer to generate global image features.

12. The apparatus of claim 10 or 11, wherein the translation model comprises an encoder and a decoder, and the translation module comprises:

an encoding module configured for inputting the target detection features and the global image features into the encoder of the translation model to generate encoding vectors outputted by the encoder;

a decoding module configured for inputting the encoding vectors and the global image features into the decoder to generate decoding vectors outputted by the decoder;

a sentence generation module configured for generating a corresponding translation sentence based on the decoding vectors outputted by the decoder, and taking the translation sentence as a description sentence of the target image.

13. The apparatus of claim 12, wherein the encoder comprises N sequentially connected encoding layers, wherein N is an integer greater than 1; the encoding module comprises:

a first processing unit configured for inputting the target detection features and the global image features into a first encoding layer to obtain output vectors of the first encoding layer;

a second processing unit configured for inputting output vectors of an $i-1^{th}$ encoding layer and the global image features into an $i^{th}$ encoding layer to obtain output vectors of the $i^{th}$ encoding layer, wherein, $2 \leq i \leq N$;

a first determination unit configured for determining whether i is equal to N, if i is not equal to N, incrementing i by 1 and executing the second processing unit; if i is equal to N, executing encoding vectors generating unit;

the encoding vectors generating unit configured for taking output vectors of a $N^{th}$ encoding layer as the encoding vectors outputted by the encoder.

14. The apparatus of claim 13, wherein the encoding layer comprises: a first encoding self-attention layer, a second encoding self-attention layer, and a first feedforward layer; the first processing unit is specifically configured for inputting the target detection features into a first encoding self-attention layer to obtain first intermediate vectors; inputting the first intermediate vectors and the global image features into a second encoding self-attention layer to obtain second intermediate vectors; processing the second intermediate vectors through the first feedforward layer to obtain the output vectors of the first encoding layer.

**15.** The apparatus of claim 13 or 14, wherein the encoding layer comprises: the first encoding self-attention layer, the second encoding self-attention layer, and the first feedforward layer; the second processing unit is specifically configured for inputting the output vectors of the i-1$^{th}$ encoding layer into the first encoding self-attention layer to obtain third intermediate vectors; inputting the third intermediate vectors and the global image features into the second encoding self-attention layer to obtain fourth intermediate vectors; processing the fourth intermediate vectors through the first feedforward layer to obtain output vectors of the i$^{th}$ encoding layer.

**16.** The apparatus of any one of claims 12-15, the decoder comprises M sequentially connected decoding layers, wherein M is an integer greater than 1;
the decoding module comprises:

a third processing unit configured for inputting reference decoding vectors, the encoding vectors, and the global image features into a first decoding layer to obtain output vectors of the first decoding layer;
a fourth processing unit configured for inputting output vectors of a j-1$^{th}$ decoding layer, the encoding vectors and the global image features into a j$^{th}$ decoding layer to obtain output vectors of the j$^{th}$ decoding layer, wherein, $2 \leq j \leq M$ ;
a second determination unit configured for determining whether j is equal to M, if j is not equal to M, incrementing j by 1 and executing the fourth processing unit; if j is equal to M, executing decoding vectors generation unit;
the decoding vectors generation unit configured for taking output vectors of a M$^{th}$ decoding layer as the decoding vectors outputted by the decoder.

**17.** The apparatus of claim 16, wherein the decoding layer comprises: a first decoding self-attention layer, a second decoding self-attention layer, a third decoding self-attention layer, and a second feedforward layer; the third processing unit is specifically configured for: processing the reference decoding vectors through the first decoding self-attention layer to obtain fifth intermediate vectors; processing the fifth intermediate vectors and the global image features through the second decoding self-attention layer to obtain sixth intermediate vectors; processing the sixth intermediate vectors and the encoding vectors through the third decoding self-attention layer to obtain seventh intermediate vectors; processing the seventh intermediate vectors through a second feedforward layer to obtain the output vectors of the first decoding layer.

**18.** The apparatus of claim 16 or 17, wherein the decoding layer comprises: the first decoding self-attention layer, the second decoding self-attention layer, the third decoding self-attention layer, and the second feedforward layer; the fourth processing unit is specifically configured for processing the output vectors of the j-1$^{th}$ decoding layer through the first decoding self-attention layer to obtain eighth intermediate vectors; processing the eighth intermediate vectors and the global image features through the second decoding self-attention layer to obtain ninth intermediate vectors; processing the ninth intermediate vectors and the encoding vectors through the third decoding self-attention layer to obtain tenth intermediate vectors; processing the tenth intermediate vectors through the second feedforward layer to obtain the output vectors of the j$^{th}$ decoding layer.

**19.** A computing device, comprising a memory, a processor, and computer instructions executable on a processor which, when executed by a processor, implements steps of the method of any one of claims 1-9.

**20.** A computer-readable storage medium, having stored thereon computer instructions which, when executed by a processor, implements steps of the method of any one of claims 1-9.

Computing device 100

Memory 110

Processor 120

Bus 130

Access device 140

Network 160

Database 150    Database 150    ...    Database 150

FIG. 1

Performing feature extraction on a target image with a plurality of first feature extraction models to obtain image features generated by each of the first feature extraction models

201

Performing fusion processing on the image features generated by the plurality of first feature extraction models to generate global image features corresponding to the target image

202

Performing feature extraction on the target image with a second feature extraction model to obtain target detection features corresponding to the target image

203

Inputting the global image features corresponding to the target image and the target detection features corresponding to the target image into a translation model to generate a translation sentence, and taking the translation sentence as a description sentence of the target image

204

FIG. 2

Performing feature extraction on a target image with a plurality of first feature extraction models to obtain image features generated by each of the first feature extraction models

301

Performing fusion processing on the image features generated by the plurality of first feature extraction models to generate global image features corresponding to the target image

302

Performing feature extraction on the target image with a second feature extraction model to obtain target detection features corresponding to the target image

303

Inputting the target detection features and the global image features into the encoder of the translation model to generate encoding vectors outputted by the encoder

304

Inputting the encoding vectors and the global image features into the decoder to generate decoding vectors outputted by the decoder

305

Generating a corresponding translation sentence based on the decoding vectors outputted by the decoder, and taking the translation sentence as a description sentence of the target image

306

FIG. 3

First feedforward layer

↑

Second encoding self-attention layer

↑

First encoding self-attention layer

FIG. 4

Second feedforward layer

↑

Third decoding self-attention layer

↑

Second decoding self-attention layer

↑

First decoding self-attention layer

FIG. 5

FIG. 6

Feature extraction module 701

Global image feature extraction module 702

Target detection feature extraction module 703

Translation module 704

FIG. 7

## INTERNATIONAL SEARCH REPORT

| International application No. |
| --- |
| **PCT/CN2020/111602** |

| A. | CLASSIFICATION OF SUBJECT MATTER |
| --- | --- |

G06K 9/46(2006.01)i

According to International Patent Classification (IPC) or to both national classification and IPC

| B. | FIELDS SEARCHED |
| --- | --- |

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; GOOGLE: 图像描述, 全局, 局部, 特征, 融合, 编码器, 解码器, 注意力, image caption, global, local, feature, fusion, encoder, decoder, attention

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 110309839 A (BEIJINGKINGSOFT DIGITAL ENTERTAINMENT CO., LTD.) 08 October 2019 (2019-10-08) claims 1-12, description, paragraphs 34-130, figures 1-7 | 1-20 |
| PY | CN 110210499 A (CHINA UNIVERSITY OF MINING AND TECHNOLOGY) 06 September 2019 (2019-09-06) description, paragraphs 66-127, and figures 1-6 | 1-3, 10-12, 19-20 |
| Y | CN 109726696 A (UNIVERSITY OF ELECTRONIC SCIENCE AND TECHNOLOGY OF CHINA) 07 May 2019 (2019-05-07) description, paragraphs 37-102, figure 1 | 1-3, 10-12, 19-20 |
| Y | CN 108665506 A (TENCENT TECHNOLOGY SHENZHEN CO., LTD.) 16 October 2018 (2018-10-16) description, paragraphs 96-322, and figures 3-8 | 1-3, 10-12, 19-20 |
| Y | LI, Linghui et al. "GLA: Global–Local Attention for Image Description" *IEEE TRANSACTIONS ON MULTIMEDIA*, Vol. 20, No. 3, 31 March 2018 (2018-03-31), ISSN: 1520-9210, section II-IV | 1-3, 10-12, 19-20 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 November 2020** | **01 December 2020** |

| Name and mailing address of the ISA/CN | Authorized officer |
| --- | --- |
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2020/111602**

### C.    DOCUMENTS CONSIDERED TO BE RELEVANT

| Category* | Citation of document, with indication, where appropriate, of the relevant passages | Relevant to claim No. |
|---|---|---|
| A | US 9978119 B2 (KOREA INSTITUTE OF SCIENCE AND TECHNOLOGY) 22 May 2018 (2018-05-22)<br>    entire document | 1-20 |

Form PCT/ISA/210 (second sheet) (January 2015)

**INTERNATIONAL SEARCH REPORT**
Information on patent family members

International application No.

**PCT/CN2020/111602**

| Patent document cited in search report | | | Publication date (day/month/year) | Patent family member(s) | | | Publication date (day/month/year) |
|---|---|---|---|---|---|---|---|
| CN | 110309839 | A | 08 October 2019 | CN | 110309839 | B | 03 December 2019 |
| CN | 110210499 | A | 06 September 2019 | | None | | |
| CN | 109726696 | A | 07 May 2019 | | None | | |
| CN | 108665506 | A | 16 October 2018 | | None | | |
| US | 9978119 | B2 | 22 May 2018 | KR | 20170047167 | A | 04 May 2017 |
| | | | | US | 2017116705 | A1 | 27 April 2017 |

Form PCT/ISA/210 (patent family annex) (January 2015)

**REFERENCES CITED IN THE DESCRIPTION**

**Patent documents cited in the description**

- CN 201910797332X